# EUROPÄISCHE PATENTANMELDUNG

(11) **EP 0 576 704 A1**
(43) Veröffentlichungstag der Anmeldung: **05.01.1994**
(21) Anmeldenummer: 92111077.1
(22) Anmeldetag: 30.06.1992
(51) Int. Cl.: G06K 9/20, H04N 1/38, H04N 1/46

(54) **Verfahren zur Aufbereitung von mehrfarbigen Bildvorlagen für die maschinelle optische Zeichenerkennung**

(71) Anmelder: CGK Computer Gesellschaft Konstanz mbH, D-78467 Konstanz (DE)
(72) Erfinder: Schnitzlein, Markus, W-7760 Radolfzell (DE)
(74) Vertreter: Fuchs, Franz-Josef, Dr.-Ing.

(57) **Zusammenfassung**

Ein an einer eine Vielzahl von Bildpunkten aufweisenden mehrfarbigen Bildvorlage (1) reflektierter Lichtstrahl (z.B. S1) wird in einzelne Teilstrahlen (z.B. S11,...) mit jeweils verschiedener Wellenlänge zerlegt. Mehrere benachbarte, in unterschieliche Richtungen abgelenkten Teilstrahlen bilden jeweils einen Spektralanteil (z.B. A1), der einer Detektionszeile (9) mit lichtempfindlichen, zur Ermittlung jeweils eines Helligkeitswertes für jeden Bildpunkt einer Abtastzeile (4) der Bildvorlage (1) vorgesehenen Sensoren (10) zugeführt wird. Aus wenigstens zwei Detektionszeilen (9) werden schrittweise einander entsprechende Bildpunkte ausgewählt, deren Helligkeitswerte in Abhängigkeit des der jeweiligen Detektionszeile (9) zugeführten Spektralanteils (z.B. A1,A2) ermittelt werden. Anhand eines aus den jeweils ermittelten Helligkeitswerten gewonnenen Verknüpfungsergebnisses kann der in der Bildvorlage (1) abzutastende Bildpunkt einer Hintergrund- oder einer Nutzinformation zugeordnet werden.

## Beschreibung

Die Erfindung betrifft ein Verfahren zur Aufbereitung von mehrfarbigen Bildvorlagen, jeweils bestehend aus mehreren nach Hintergrund- oder Nutzinformationen zu unterscheidenden Bildpunkten, für die maschinelle optische Zeichenerkennung.

Bei der maschinellen optischen Zeichenerkennung werden bekanntlich die einzelnen Bildvorlagen, wie z.B. Belege, Formulare und dergleichen, meßtechnisch erfaßt und vorbereitet, bevor sie anschließend daraufhin untersucht werden, welche hand- oder maschinenschriftlich eingetragenen Schriftzeichen sich auf den Bildvorlagen befinden. Die meßtechnische Erfassung einer Bildvorlage umfaßt eine optische Abtastung, durch die die Vorlage in eine Vielzahl von einzelnen Bildpunkten (Pixeln) umgewandelt wird.

Ein wesentlicher Zweck der Aufbereitung einer Bildvorlage besteht darin, die einzelnen Bildpunkte der Vorlage nach Nutz- oder Hintergrundinformation unterscheiden zu können. Bei mehrfarbigen Bildvorlagen werden üblicherweise Vorabinformationen über die jeweils zu untersuchende Bildvorlage herangezogen, um eine Trennung der Nutzinformationen von der Hintergrundstruktur zu erreichen. Eine derartige Vorabinformation ist beispielsweise die Kenntnis der für die Hintergrundstruktur verwendeten Farbe. Durch ein entsprechendes Farbfilter läßt sich der Kontrast der Hintergrundstruktur verringern, um die Nutzinformationen nach einer Kontraststeigerung herauszulösen und der eigentlichen Zeichenerkennung zur Verfügung zu stellen.

Helligkeitsschwankungen in der Hintergrundstruktur, beispielsweise hervorgerufen durch Verschmutzungen auf der Bildvorlage, können zu einer wesentlichen Verschlechterung der Unterdrückung führen, wobei sich der Farbton der Hintergrundstruktur nicht geändert hat. Bei unzureichender Unterdrückung der Hintergrundstruktur führen schwarze Bildpunkte in der Umgebung der Zeichen zu einer erhöhten Anzahl von Rückweisungen bei der eigentlichen Erkennung und grundsätzlich zu einer verminderten Erkennungssicherheit.

Mit einem herkömmlichen Verfahren, die einzelnen Farben auf einer Bildvorlage jeweils als eine Mischung von Grundfarben zu erkennen und sie diesen Grundfarben und ihren Mischungen zuzuordnen, können geringfügige Farbunterschiede zwischen der Nutzinformation und der Hintergrundinformation nicht detektiert werden. Die Güte der Trennung der Hintergrundstruktur von der Nutzinformation auf den Bildvorlagen stellt sich in vielen Fällen als begrenzendes Kriterium für die Zeichenerkennung dar.

Es ist daher die Aufgabe der Erfindung, ein Verfahren zur Aufbereitung von mehrfarbigen Bildvorlagen zu schaffen, durch das eine möglichst optimale Trennung der Nutzinformationen von den Hintergrundinformationen für alle möglichen Farbunterschiede auf den Bildvorlagen erzielbar ist.

Diese Aufgabe wird durch die Merkmale des Patentanspruches 1 gelöst.

Demnach bilden die aus einem an der abzutastenden Bildvorlege reflektierten Lichtstrahl gewonnenen Teilstrahlen mit jeweils verschiedener Wellenlänge einen Spektralanteil, der jeweils einer Detektionszeile mit mehreren lichtempfindlichen Sensoren zugeführt wird. Durch die jeweilige Auswahl einander entsprechender Bildpunkte aus verschiedenen Detektionszeilen ist es möglich, zu den Bildpunkten gehörige Helligkeitswerte in Abhängigkeit des jeweiligen Spektralanteils zu messen. Anhand einer Verknüpfung der gewonnenen spektralen Eigenschaften, die sich in unterschiedlichen oder gleichbleibenden Helligkeitswerten der einander entsprechenden Bildpunkte niederschlagen, kann für jeden Bildpunkt festgelegt werden, ob er eine Hintergrund- oder eine Nutzinformation auf der Bildvorlage darstellt.

Durch die Untersuchung der einzelnen Spektralanteile, die sowohl in der Wellenlänge als auch in der Bandbreite wählbar ist, lassen sich auch Farbnuancen unterscheiden, die für das menschliche Auge gegebenenfalls nicht erkennbar sind. Neben der besseren Zuordnungsmöglichkeit für jeden einzelnen Bildpunkt zur Hintergrundinformation bzw. zur Nutzinformation besteht ein weiterer Vorteil darin, daß die Aufbereitung der einzelnen Bildvorlagen gemäß dem erfindungsgemäßen Verfahren unabhängig von der Wahl vorgegebener, zulässiger Farben für die Hintergrundstruktur erfolgt. Damit ist beispielsweise auch die Möglichkeit gegeben, eine bestimmte schwarze Farbe für die Hintergrundstruktur von einem schwarzähnlichen, beispielsweise einem dunkelblauen, Schreibmittel eindeutig zu trennen, was für das menschliche Auge sehr schwierig erscheint.

Eine empfindliche und genaue Farbunterscheidung kann gemäß der Erfindung bereits auf der Basis von nur zwei spektralen Charakteristiken der Farben erzielt werden, was gegenüber herkömmlichen Verfahren, die in der Regel mehr als zwei Meßpunkte im Spektralverlauf vorsehen, einen geringeren Aufwand bedeutet.

Gemäß einer Weiterbildung der Erfindung wird bei jeder Untersuchung der spektralen Eigenschaften in jedem Fall die für die Aufnahme des Spektralanteils der Hintergrundinformation vorgesehene Detektionszeile verwendet. Dies hat den Vorteil, daß der Unterschied zwischen den Helligkeitswerten eines Bildpunktes aus der genannten Detektionszeile und des entsprechenden Bildpunktes aus mindestens einer weiteren Detektionszeile bei Vorliegen einer Nutzinformation besonders deutlich hervortritt.

Gemäß bevorzugter Ausführungsformen der Erfindung können Sensoreinheiten verwendet werden, die jeweils eine einzige oder mehrere parallel angeordnete Detektionszeilen aufweisen. Bei Verwendung einer Sensoreinheit mit vorzugsweise zwei, in einem beliebigen Abstand voneinander entfernten Detektionszeilen werden die einzelnen Spektralanteile durch einen entsprechend einstellbaren Spiegel umgelenkt. Weisen die Sensoreinheiten jeweils nur eine einzelne Detektionszeile auf, können die Spektralanteile über mehrere, jeweils einer Sensoreinheit zugeordnete Spiegel zugeführt werden.

Andere Weiterbildungen der Erfindung beziehen sich auf vorteilhafte Maßnahmen für die Aufspaltung des an der Bildvorlage reflektierten Lichtstrahls in die einzelnen Teilstrahlen.

Gemäß den Merkmalen des Patentanspruches 9, mit denen die der Erfindung zugrundeliegende Aufgabe ebenfalls gelöst werden kann, werden ein Abtastbereich mit mehreren Abtastzeilen aus der Bildvorlage ausgewählt und die an den verschiedenen Abtastzeilen reflektierten Lichtstrahlen unmittelbar verschiedenen Detektionszeilen mit jeweils nur in einem vorgegebenen Wellenlängenbereich empfindlichen Sensoren zugeführt. Wegen der von Zeile zu Zeile unterschiedlichen Empfindlichkeiten der einzelnen Sensoren erhält man zu den aus der Bildvorlage ausgewählten Bildpunkten der verschiedenen Abtastzeilen jeweils einen anderen Helligkeitswert. Bei Vorliegen der Werte für einander entsprechende Bildpunkte aus verschiedenen Detektionszeilen kann die Verknüpfung der Helligkeitswerte und die Zuordnung des abzutastenden Bildpunktes zur Hintergrund- oder Nutzinformation vorgenommen werden.

Der Vorteil dieses Verfahrens liegt darin, daß die zum abzutastenden Bildpunkt gehörigen, miteinander zu verknüpfenden, unterschiedlichen Helligkeitswerte immer an derselben Stelle auf der Bildvorlage zu verschiedenen Zeitpunkten ermittelt werden.

Gemäß einer Weiterbildung der Erfindung wird eine Sensoreinheit mit mehreren, jeweils in einem konstanten Abstand zueinander parallel angeordneten Detektionszeilen verwendet. Diese Art der Sensoreinheit ermöglicht eine Abtastbewegung mit gleichmäßigen Einzelschritten. Die mehrzeiligen Sensoreinheiten sind als Standardbauelemente mit unterschiedlicher Anzahl von Bildpunkten pro Abtastzeile am wirtschaftlichsten einsetzbar.

Eine weitere Alternative zur Lösung der der Erfindung zugrundeliegenden Aufgabe enthält Patentanspruch 11, wonach der an der zeilenweise abzutastenden Bildvorlage reflektierte Lichtstrahl unmittelbar einer einzigen Detektionszeile mit mehreren lichtempfindlichen Sensoren zugeführt wird. Dabei liefern die in vorgegebenen Wellenlängenbereichen empfindlichen Sensoren der Detektionszeile in Abhängigkeit des zugeführten Lichtstrahls für jeden, in mehrere Teillängen unterteilten Bildpunkt einer Abtastzeile mehrere Helligkeitswerte. Anhand der Verknüpfung der jeweils ermittelten Helligkeitswerte erfolgt die Zuordnung des jeweils abzutastenden Bildpunkts zur Hintergrund- oder zur Nutzinformation.

Gemäß einer Weiterbildung der Erfindung wird eine Sensoreinheit mit einer linearen Detektionszeile verwendet, die, eingesetzt als Standardbauelement, für jeden Bildpunkt eine Mehrzahl spektraler Charakteristiken in Abhängigkeit der jeweiligen Empfindlichkeit der einzelnen Sensoren liefert.

Allen erfindungsgemäßen Verfahren gemeinsam ist die Verknüpfung der jeweils ermittelten Helligkeitswerte der einander entsprechenden Bildpunkte, wobei gemäß bevorzugter Maßnahmen lediglich die beiden größten Werte für die Verknüpfung berücksichtigt und als Verknüpfung eine Division der jeweiligen Werte durchgeführt werden.

Die Erfindung wird anhand eines in der Zeichnung dargestellten Ausführungsbeispiels näher erläutert.

Im einzelnen zeigen
Figur 1 eine Vorrichtung zur Aufbereitung von mehrfarbigen Bildvorlagen nach dem erfindungsgemäßen Verfahren,
Figur 2 bis Figur 4 bevorzugte Ausführungsarten der in der Vorrichtung gemäß Figur 1 vorgesehenen Sensoreinheit,
Figur 5 und Figur 6 alternative Ausführungsformen der Sensoreinheit,
Figur 7 einen Ausschnitt einer in verschiedene Bereiche aufgeteilten Bildvorlage mit mehreren Bildpunkten einer Abtastzeile und
Figur 8 die Spektralverläufe von jeweils in den einzelnen Bereichen gemäß Figur 7 abzutastenden Bildpunkten.

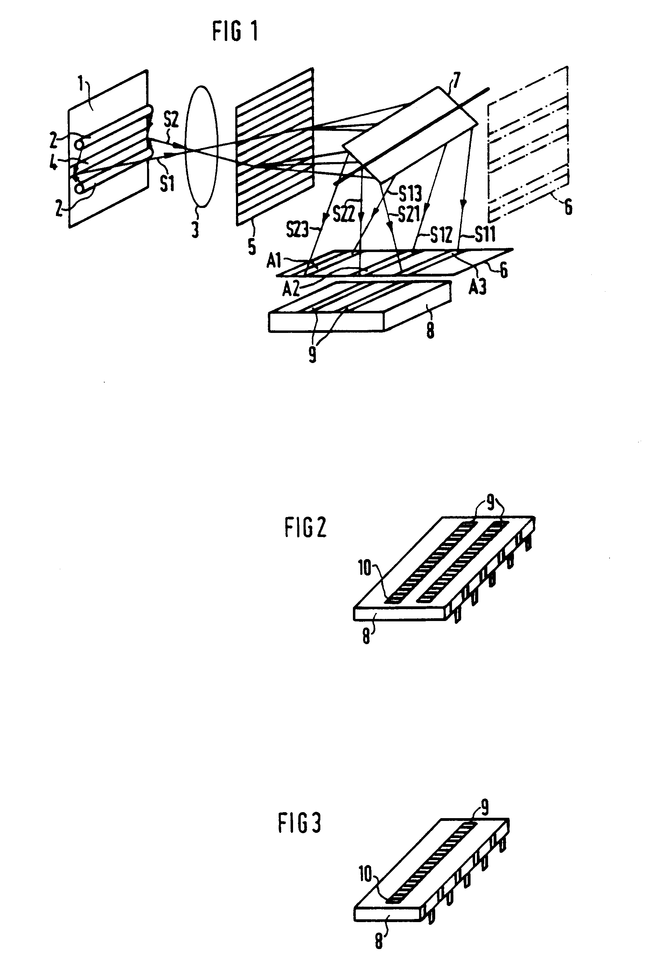

Figur 1 zeigt eine nach dem erfindungsgemäßen Verfahren arbeitende Vorrichtung zur Aufbereitung von mehrfarbigen Bildvorlagen für die maschinelle optische Zeichenerkennung. Diese Vorrichtung ist beispielsweise Bestandteil eines Abtastsystems (Scanner), dessen Aufgabe im Rahmen der optischen Zeichenerkennung in der Bildvorverarbeitung liegt.

Aus einer von einem Transportsystem angelieferten Bildvorlage 1 wird jeweils ein mit einer die Breite eines Bildpunktes aufweisenden Abtastzeile 4 übereinstimmender Bereich von einer Lichtquelle 2 mit kontinuierlichem Spektrum beleuchtet. Zum Ausblenden der Abtastzeilen 4 ist eine parallel zur Bildvorlage 1 angeordnete Spaltblende vorgesehen. Die Lichtquelle 2 besteht beispielsweise aus Niederdruck-Leuchtstofflampen, die wegen ihrer langen Lebensdauer und ihres hohen Wirkungsgrades für ein Abtastsystem besonders geeignet sind.

Jeweils ein von der Bildvorlage 1 reflektierter Lichtstrahl S1 bzw. S2 durchläuft eine optische Einrichtung 3, beispielsweise bestehend aus einem Objektiv, und trifft auf eine spektrale Trenneinheit 5. Als spektrale Trenneinheit 5 ist im Ausführungsbeispiel ein Amplituden- oder Phasengitter vorgesehen, jedoch sind auch äquivalente Einrichtungen, wie beispielsweise ein Prisma, einsetzbar. Die Funktion der spektralen Trenneinheit 5 besteht in einer Aufspaltung des jeweiligen Lichtstrahls S1 bzw. S2 in Teilstrahlen S11, S12, S13 bzw. S21, S22, S23 mit jeweils verschiedener Wellenlänge, wobei die Teilstrahlen S11... bzw. S21... jeweils in unterschiedliche Richtungen abgelenkt werden.

Das dadurch entstehende, nach Wellenlängen von ca. 400 nm (violett) bis ca. 800 nm (Infrarot) räumlich getrennte Spektrum 6 kann in einzelne Spektralanteile, z.B. A1, A2, A3,... aufgeteilt werden, die jeweils aus mehreren benachbarten, von der spektralen Trenneinheit 5 abgelenkten Teilstrahlen bestehen. In den Spektralanteilen A1, A2 bzw. A3 sind beispielsweise die Teilstrahlen der Grundfarben blau, grün bzw. rot und deren zugehörige Farbtöne enthalten, da der Übergang von einer Farbe zu einer anderen Farbe im Spektrum 6 kontinuierlich verläuft und somit jeder Spektralanteil einen bestimmten Wellenlängenbereich umfaßt.

Die von der spektralen Trenneinheit 5 abgelenkten Teilstrahlen S11...bzw. S21... werden von einem Stellglied 7, das vorzugsweise aus mindestens einem in seiner Position einstellbaren Spiegel besteht, auf eine Sensoreinheit 8 umgelenkt. Diese als integrierte Schaltung hergestellte Sensoreinheit 8 (Sensorchip) weist an ihrer Oberfläche eine oder mehrere Detektionszeilen 9 mit jeweils lichtempfindlichen Sensoren auf. Die Sensoren bestehen aus gleichartigen Fotodioden, die nach dem Prinzip von ladungsgekoppelten Schieberegistern (Charge Coupled Devices) miteinander verbunden sind. Durch derartige CCD-Sensorzeilen besteht die Möglichkeit, für jeden Bildpunkt einer Abtastzeile 4 der Bildvorlage 1 einen Helligkeitswert zu ermitteln und die somit gewonnene Information mit einer Schiebeoperation aus der Detektionszeile 9 zu entnehmen. Durch eine Verdrehung des Spiegels 7 läßt sich einstellen, welcher Spektralanteil, z.B. A1, A2 oder A3, einer der beiden Detektionszeilen 9 der Sensoreinheit 8 zugeführt wird.

In Abwandlung der in der Figur 1 dargestellten Konfiguration ist auch eine Vorrichtung aufbaubar, bei der die Teilstrahlen S11... bzw. S21... über vorzugsweise zwei voneinander unabhängig einstellbare Spiegel auf jeweils eine Sensoreinheit 8 mit einer einzigen Detektionszeile 9 umgelenkt werden. Für den Fall, daß kein Stellglied 7 zur Umlenkung der einzelnen Teilstrahlen S11... bzw. S21... auf die Sensoreinheit 8 vorgesehen ist, befindet sich das nach den Wellenlängen räumlich getrennte Spektrum 6 parallel zur spektralen Trenneinheit 5. In diesem Fall ist die Sensoreinheit 8 zur Aufnahme der einzelnen Spektralanteile, z.B. A1, A2, A3,... im direkten Strahlengang angeordnet.

Durch die Verwendung von wenigstens - zugleich vorzugsweise - zwei Detektionszeilen 9, die unterschiedliche Spektralanteile aufnehmen, besteht die Möglichkeit, schrittweise für jeden abzutastenden Bildpunkt der Bildvorlage 1 gleichzeitig mehrere - vorzugsweise zwei - Helligkeitswerte in Abhängigkeit des der jeweiligen Detektionszeile 9 zugeführten Spektralanteils zu ermitteln. Eine anschliessende Verknüpfung der jeweils ermittelten Helligkeitswerte der aus den Detektionszeilen 9 ausgewählten, einander entsprechenden Bildpunkte führt zu einem helligkeitsinvarianten Verknüpfungsergebnis, anhand dessen eine Zuordnung des jeweils in der Bildvorlage 1 abzutastenden Bildpunktes zu einer Hintergrund- oder einer Nutzinformation sehr einfach möglich ist. Auf diese Weise lassen sich auf der Bildvorlage 1 vorhandene, geringfügige Farbunterschiede zwischen den Nutz- und den Hintergrundinformationen auf Grund der spektralen Empfindlichkeiten eindeutig erkennen.

Vorzugsweise besteht die Verknüpfung der von den verschiedenen Detektionszeilen 9 gelieferten Helligkeitswerte in der Bildung eines Quotienten aus zwei Werten, wobei bei der Auswahl von einander entsprechenden Bildpunkten aus mehr als zwei Detektionszeilen von den jeweils ermittelten Helligkeitswerten die beiden höchsten Werte herangezogen und der oder die niedrigeren Werte vernachlässigt werden. Grundsätzlich können aber auch andere Arten der Verknüpfung verwendet werden. Durch die Quotientenbildung wirken sich Helligkeitsschwankungen der Hintergrundstruktur, hervorgerufen beispielsweise durch Verschmutzungen, nicht auf das Verhältnis der gemessenen Helligkeitswerte und damit auf die eindeutige Klassifizierung eines Bildpunktes als Hintergrund- oder als Nutzinformation aus. Besonders markante Unterschiede in den spektralen Charakteristiken erhält man, wenn einer der einander entsprechenden Bildpunkte jeweils aus der für die Aufnahme des Spektralanteils der Hintergrundinformation vorgesehenen Detektionszeile ausgewählt wird. Dies bedeutet beispielsweise, daß bei einer roten Hintergrundfarbe in jedem Fall der die Grundfarbe rot einschließlich der zugehörigen Farbtöne umfassende Spektralanteil in die Auswertung mit einzubeziehen ist.

Figur 2 bis Figur 4 zeigen unterschiedliche Arten von Sensoreinheiten 8 in Chipbauweise, die in der Vorrichtung gemäß Figur 1 eingesetzt werden können. In Figur 2 ist eine Sensoreinheit 8 mit zwei parallel angeordneten Detektionszeilen 9 dargestellt. Wie bereits erwähnt, besteht jede der Detektionszeilen 9 aus einer Anordnung von gleichermaßen lichtempfindlichen Fotodioden 10. Die CCD-Zeilen (Charge Coupled Devices) ermöglichen die Abtastung einer Bildvorlage in Zeilen von Bildpunkten, wobei jede der Fotodioden 10 den Helligkeitswert eines Bildpunktes der Abtastzeile liefert. Weist die Vorrichtung gemäß Figur 1 zur Aufbereitung von mehrfarbigen Bildvorlagen ein Stellglied auf, so besteht die Möglichkeit, die Auswahl der zu untersuchenden Spektralanteile durch Umlenkung der zugehörigen Teilstrahlen auf die entsprechenden CCD-Zeilen zu variieren.

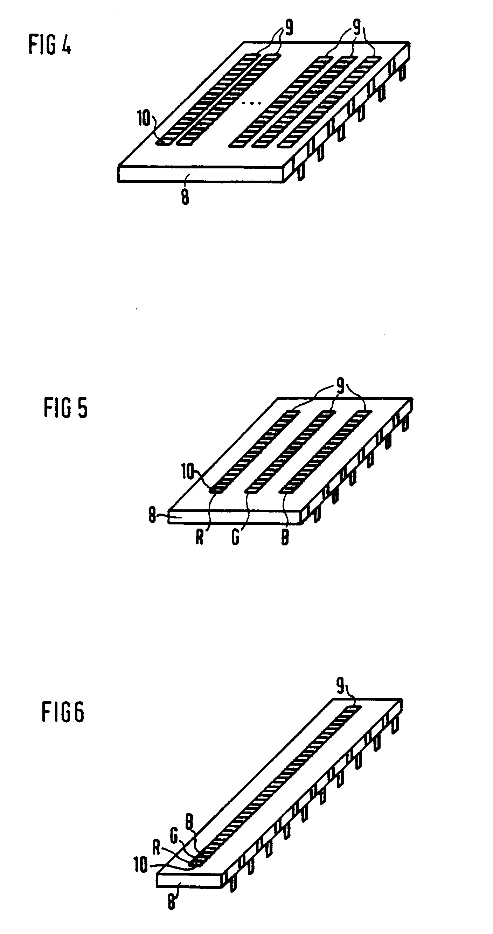

Figur 3 zeigt den Typ einer Sensoreinheit 8 mit lediglich einer einzelnen Detektionszeile 9, bestehend ebenfalls aus einer Fotodiodenanordnung mit einer Vielzahl von gleichermaßen lichtempfindlichen Fotodioden 10. Bei Verwendung mehrerer derartiger einzeiliger Sensoreinheiten 8 bedarf es unabhängig voneinander einstellbarer Spiegel in der Vorrichtung gemäß Figur 1, um jeweils einen Spektralanteil auf eine der Sensoreinheit 8 zugeordnete einzelne Detektionszeile 9 umzulenken. Durch vorzugsweise zwei unabhängig voneinander festlegbare Wellenlängenbereiche erhält man gegenüber der Variante gemäß Figur 2 mit nur einem Stellglied eine höhere Flexibilität bezüglich der Untersuchung der spektralen Charakteristiken.

Eine weitere alternative Ausführungsform der Sensoreinheit 8 ist in Figur 4 dargestellt. Sie weist eine Vielzahl von parallel angeordneten Detektionszeilen 9 mit den jeweiligen lichtempfindlichen Fotodioden 10 auf. Damit ist es möglich, ein vollständiges Spektrum eines jeden Bildpunktes einer Abtastzeile aufzunehmen, und durch die Auswahl von einer oder mehreren Detektionszeilen die Helligkeitswerte einander entsprechender Bildpunkte zu ermitteln. Den in Figur 2 bis Figur 4 dargestellten Ausführungsformen der Sensoreinheit 8 ist gemeinsam, daß die Helligkeitswerte der aus wenigstens - zugleich vorzugsweise - zwei Detektionszeilen ausgewählten, einander entsprechenden Bildpunkte gleichzeitig bereitgestellt werden.

Bei der Verwendung einer Sensoreinheit 8 gemäß der Figur 5 oder der Figur 6 entfallen in der in Figur 1 dargestellten Vorrichtung die spektrale Trenneinheit sowie das Stellglied, so daß ein oder mehrere Lichtstrahlen S1 bzw. S2 unmittelbar auf die in der Ebene der Bildvorlage angeordnete Sensoreinheit 8 fallen.

Die in Figur 5 gezeigte Sensoreinheit 8 weist beispielsweise drei in einem konstanten Abstand voneinander parallel angeordnete Detektionszeilen 9 mit in unterschiedlichen Wellenlängenbereichen lichtempfindlichen Fotodioden 10 auf. Aus den einzelnen, den CCD-Zeilen jeweils Zugeführten Lichtstrahlen, die an verschiedenen Abtastzeilen der Bildvorlagen reflektiert werden, werden von den einzelnen Fotodioden 10 einer Zeile beispielsweise nur die Grundfarbe rot R, grün G oder Blau B detektiert und gefiltert. Dabei werden die zu einander entsprechenden Bildpunkten aus verschiedenen Detektionszeilen gehörigen Helligkeitswerte nacheinander, das heißt zu verschiedenen Zeitpunkten, bereitgestellt. Dies bedeutet, daß jeder für einen abzutastenden Bildpunkt der Bildvorlage erforderliche Einzelschritt ein ganzzahliger Bruchteil des Abstandes der einzelnen Detektionszeilen 9 ist. Von den bereitgestellten Helligkeitswerten für die einander entsprechenden Bildpunkte aus den beispielsweise drei Detektionszeilen 9 werden zur Bildung eines Quotienten vorzugsweise die beiden höchsten Werte herangezogen, während der niedrigste Helligkeitswert unberücksichtigt bleibt.

Figur 6 zeigt eine lineare Sensoreinheit 8 mit einer einzigen Detektionszeile 9, deren in verschiedenen Wellenlängenbereichen empfindliche Fotodioden 10 jeweils für jeden Bildpunkt einer einzelnen Abtastzeile mehrere Helligkeitswerte liefern. Dies wird erreicht, indem ein abzutastender Bildpunkt in beispielsweise drei Teillängen unterteilt und diesen Teillängen jeweils eine Fotodiode zur Filterung einer vorgegebenen Grundfarbe rot R, grün G bzw. blau B zugeordnet werden.

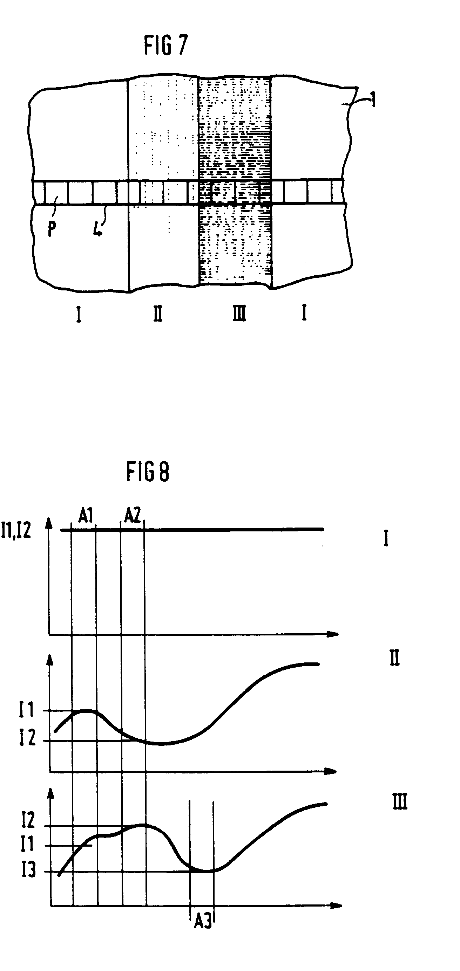

Figur 7 zeigt einen Ausschnitt einer Bildvorlage 1, die hinsichtlich der auftretenden Farben in mehrere Bereiche I, II und III eingeteilt werden kann. In dem dargestellten Ausschnitt ist ein Teil einer Abtastzeile 4 mit mehreren Bildpunkten P eingetragen. Der Bereich I enthält die Grundfarbe der Bildvorlage, beispielsweise bei Formularen die Farbe weiß für das Papier, auf das die Informationen aufgebracht werden. Im Bereich II können sämtliche Farben vorkommen, die auf Grund von vorgedruckten oder eingetragenen Nutzinformationen auf die Bildvorlage 1 gelangen. Der Bereich III stellt ein Beispiel für eine Hintergrundstruktur mit beispielsweise einem hohem Anteil der Farbe schwarz dar. Abhängig davon, in welchem der Bereiche I, II oder III sich der Bildpunkt P der jeweiligen Abtastzeile 4 befindet, ergeben sich unterschiedliche Spektralverläufe über den gesamten Wellenlängenbereich, der die einzelnen, aus mehreren Teilstrahlen jeweils gebildeten Spektralanteile aufweist.

Figur 8 zeigt derartige Spektralverläufe in einer zweidimensionalen Darstellung, in der auf der Abszisse der Wellenlängenbereich des gesamten Spektrums mit den ausgewählten Spektralanteilen A1, A2 und A3 sowie auf der Ordinate die aus den Detektionszeilen gewonnenen Helligkeitswerte I1, I2, und I3 abgebildet sind. Für einen im Bereich I der Bildvorlage abzutastenden Bildpunkt ergibt sich ein ebener Spektralverlauf. Dies bedeutet, daß unabhängig vom aufgenommenen Spektralanteil die Detektionszeilen der Sensoreinheit jeweils denselben Helligkeitwert liefern. Das Quotientenverhältnis der aus den beiden nicht überlappenden Spektralanteilen A1 und A2 gemessenen Helligkeitswerte I1 und I2 ist somit 1:1.

Ein kurvenförmiger Spektralverlauf entsteht für einen im Bereich II der Bildvorlage enthaltenen Bildpunkt, der Bestandteil der Nutzinformationen ist. Es ergibt sich auf Grund des der ersten Detektionszeile zugeführten Spektralanteils A1 der Helligkeitswert I1, der größer ist als der auf Grund des der zweiten Detektionszeile zugeführten Spektralanteils A2 ermittelte Helligkeitswert I2. Daraus resultiert ein Quotientenverhältnis I1/I2 von 2:1, aus dem festgestellt werden kann, daß der abzutastende Bildpunkt P im Bereich II eine Nutzinformation darstellt.

Die für einen im Bereich III der Bildvorlage enthaltenen Bildpunkt in entsprechender Weise sich aus den Spektralanteilen A1 und A2 ergebenden Helligkeitswerte I1 und I2 führen zu einem Quotientenverhältnis I1/I2 von 3:4, das heißt, ein Verhältnis kleiner als 1. Die Verknüpfung der beiden ermittelten Helligkeitswerte in Form einer Quotientenbildung liefert ein Quotientenverhältnis, anhand dessen der abzutastende Bildpunkt eindeutig der Hintergrundinformation zugeordnet werden kann. Bei einer Auswahl einander entsprechender Bildpunkte pro Abtastschritt aus beispielsweise drei Detektionszeilen wird der in Abhängigkeit des der dritten Detektionszeile zugeführten Spektralanteils A3 gemessene Helligkeitswert I3 für die Quotientenbildung nicht herangezogen, da er von allen Helligkeitswerten I1, I2 und I3 den kleinsten Wert darstellt.

Insgesamt ist festzustellen, daß je nach Auswahl der einander entsprechenden Bildpunkte aus wenigstens - zugleich vorzugsweise - zwei Detektionszeilen in Abhängigkeit von den Spektralanteilen Helligkeitswerte ermittelt und deren Unterschiede zur eindeutigen Trennung von Nutz- und Hintergrundinformationen ausgenutzt werden.

## Patentansprüche

1. Verfahren zur Aufbereitung von mehrfarbigen Bildvorlagen (1), bestehend jeweils aus einer Vielzahl von Bildpunkten (P), für die maschinelle optische Zeichenerkennung, bei dem
- die Bildpunkte (P) einer Bildvorlage (1) nach Hintergrund- oder Nutzinformationen unterschieden werden,
- ein an einer zeilenweise in der Breite eines Bildpunktes (P) abzutastenden Bildvorlage (1) reflektierter Lichtstrahl (z.B. S1) in einzelne Teilstrahlen (z.B. S11,...) mit jeweils verschiedener Wellenlänge zerlegt und die Teilstrahlen (z.B. S11,...) in unterschiedliche Richtungen abgelenkt werden,
- je ein aus mehreren benachbarten Teilstrahlen bestehender Spektralanteil (z.B. A1) jeweils einer Detektionszeile (9) mit mehreren lichtempfindlichen, zur Ermittlung jeweils eines Helligkeitswertes (z.B. I1) für jeden Bildpunkt (P) einer Abtastzeile (4) der Bildvorlage (1) vorgesehenen Sensoren (10) zugeführt wird,
- aus wenigstens zwei Detektionszeilen (9) schrittweise einander entsprechende Bildpunkte ausgewählt werden, deren jeweilige Helligkeitswerte (z.B. I1,I2) in Abhängigkeit des der jeweiligen Detektionszeile (9) zugeführten Spektralanteils (z.B. A1,A2) ermittelt werden, und bei dem
- die jeweils ermittelten Helligkeitswerte (z.B. I1,I2) miteinander verknüpft und der jeweils abzutastende Bildpunkt (P) anhand des Verknüpfungsergebnisses der Hintergrund- oder der Nutzinformation zugeordnet werden.

2. Verfahren nach Anspruch 1, **dadurch gekennzeichnet,** daß einer der einander entsprechenden Bildpunkte jeweils aus der für die Aufnahme des Spektralanteils (z.B. A1) der Hintergrundinformation vorgesehenen Detektionszeile (9) ausgewählt wird.

3. Verfahren nach Anspruch 1 oder 2, **dadurch gekennzeichnet,** daß die einzelnen Spektralanteile (z.B. A1,A2) von wenigstens einem in seiner Position einstellbaren Spiegel (7) auf die die einander entsprechenden Bildpunkte enthaltenden Detektionszeilen (9) umgelenkt werden.

4. Verfahren nach einem der Ansprüche 1 bis 3, **dadurch gekennzeichnet,** daß eine Sensoreinheit (8) mit zwei parallel angeordneten Detektionszeilen (9) zur Aufnahme der Spektralanteile (z.B. A1, A2) verwendet wird.

5. Verfahren nach einem der Ansprüche 1 bis 3, **dadurch gekennzeichnet,** daß mehrere Sensoreinheiten (8) mit jeweils einer einzigen Detektionszeile (9) verwendet werden, der jeweils ein von einem der jeweiligen Sensoreinheit (8) zugeordneten, in seiner Position einstellbaren Spiegel (7) umgelenkter Spektralanteil (z.B. A1) zugeführt wird.

6. Verfahren nach einem der Ansprüche 1 bis 3, **dadurch gekennzeichnet,** daß eine Sensoreinheit (8) mit einer Vielzahl von parallel angeordneten Detektionszeilen (9) zur Aufnahme der einzelnen Spektralanteile (z.B. A1,A2) verwendet wird, die getrennt voneinander ausgewählt und ausgelesen werden.

7. Verfahren nach einem der vorhergehenden Ansprüche, **dadurch gekennzeichnet,** daß der an der Bildvorlage (1) reflektierte Lichtstrahl (z.B. S1) durch ein Prisma in die einzelnen Teilstrahlen (z.B. S11,...) aufgespalten wird.

8. Verfahren nach einem der vorhergehenden Ansprüche, **dadurch gekennzeichnet,** daß der an der Bildvorlage (1) reflektierte Lichtstrahl (z.B. S1) durch ein Amplituden- oder Phasengitter (5) in die einzelnen Teilstrahlen (z.B. S11,...) aufgespalten wird.

9. Verfahren zur Aufbereitung von mehrfarbigen Bildvorlagen (1), bestehend jeweils aus einer Vielzahl von Bildpunkten (P), für die maschinelle optische Zeichenerkennung, bei dem
- die Bildpunkte (P) einer Bildvorlage (1) nach Hintergrund- oder Nutzinformationen unterschieden werden,
- aus der zeilenweise in der Breite eines Bildpunktes (P) abzutastenden Bildvorlage (1) ein wenigstens zwei Abtastzeilen umfassender Abtastbereich ausgewählt und an den einzelnen Abtastzeilen der Bildvorlage (1) reflektierte Lichtstrahlen (z.B. S1,S2) verschiedenen Detektionszeilen (9) mit jeweils mehreren lichtempfindlichen Sensoren (10) zugeführt werden,
- jeweils ein Helligkeitswert (z.B. I1) für jeden Bildpunkt (P) einer Abtastzeile von den einzelnen, in einem vorgegebenen Wellenlängenbereich empfindlichen Sensoren (10) einer Detektionszeile (9) in Abhängigkeit des jeweils zugeführten Lichtstrahls (z.B. S1) bereitgestellt wird, und bei dem
- die für einander entsprechende Bildpunkte aus verschiedenen Detektionszeilen (9) bereitgestellten Helligkeitswerte (z.B. I1,I2) miteinander verknüpft und der jeweils abzutastende Bildpunkt (P) anhand des Verknüpfungsergebnisses der Hintergrund- oder der Nutzinformation zugeordnet werden.

10. Verfahren nach Anspruch 9, **dadurch gekennzeichnet,** daß eine Sensoreinheit (8) mit wenigstens zwei, jeweils in einem konstanten Abstand zueinander parallel angeordneten Detektionszeilen (9) zur Aufnahme des jeweiligen Lichtstrahls (z.B. S1) verwendet wird.

11. Verfahren zur Aufbereitung von mehrfarbigen Bildvorlagen (1), bestehend jeweils aus einer Vielzahl von Bildpunkten (P), für die maschinelle optische Zeichenerkennung, bei dem
- die Bildpunkte (P) einer Bildvorlage (1) nach Hintergrund- oder Nutzinformationen unterschieden werden,
- ein an einer zeilenweise in der Breite eines Bildpunktes (P) abzutastenden Bildvorlage (1) reflektierter Lichtstrahl (z.B. S1) jeweils einer einzigen Detektionszeile (9) mit mehreren lichtempfindlichen Sensoren (10) zugeführt wird,
- jeweils mehrere Helligkeitswerte (z.B. I1,I2) für jeden in wenigstens zwei Teillängen unterteilten Bildpunkt (P) einer Abtastzeile von den einzelnen, in einem vorgegebenen Wellenlängenbereich empfindlichen Sensoren (10) der Detektionszeile (9) in Abhängigkeit des zugeführten Lichtstrahls (z.B. S1) ermittelt werden, und bei dem
- die jeweils ermittelten Helligkeitswerte (z.B. I1,I2) miteinander verknüpft und der jeweils abzutastende Bildpunkt (P) anhand des Verknüpfungsergebnisses der Hintergrund- oder der Nutzinformation zugeordnet werden.

12. Verfahren nach Anspruch 11, **dadurch gekennzeichnet,** daß eine Sensoreinheit (8) mit einer linearen Detektionszeile (9) zur Aufnahme des Lichtstrahls (z.B. S1) verwendet wird.

13. Verfahren nach einem der vorhergehenden Ansprüche, **dadurch gekennzeichnet,** daß von den jeweils ermittelten Helligkeitswerten (z.B. I1,I2,I3) die beiden höchsten Helligkeitswerte (z.B. I1,I2) miteinander verknüpft werden.

14. Verfahren nach einem der vorhergehenden Ansprüche, **dadurch gekennzeichnet,** daß das Verknüpfungsergebnis durch eine Division der jeweiligen Helligkeitswerte (z.B. I1,I2) gebildet wird.
